# EUROPEAN PATENT APPLICATION

(11) **EP 3 913 012 A1**
(43) Date of publication of application: **24.11.2021**
(21) Application number: 20175463.7
(22) Date of filing: 19.05.2020
(51) Int. Cl.: C08G 59/68, C08G 65/10, F16L 55/165

(54) **A RESIN-COMPOSITION AND METHOD FOR CURING A LINER**

(71) Applicant: Rapollo Resins ApS, 7100 Vejle (DK)
(72) Inventor: TALPADA, Vinod, 7100 Vejle (DK)
(74) Representative: Budde Schou A/S

(57) **Abstract**

The present invention relates to resin-composition which is curable and polymerizable by an electromagnetic radiation. The composition comprises one or more polymerizable and/or crosslinkable organic compounds; a photoinitiator comprising an iodonium salt; a first photosensitizer and a second photosensitizer;
a copper-complex; one or more redox or photochemical rearrangement organic compound; and one or more diluents. The invention also relates to a method for curing a liner and use of the resin-composition for manufacturing composite parts.

## Description

The present invention relates to a curable resin-composition and a method for curing a liner. The resin-composition may be used for rehabilitation of line and tank systems used for liquids and gases, protecting tubes from corrosion or to reinforce pressurized pipes. Moreover, the resin-composition may be used in a composite for e.g. boat building and wind turbine blades. The resin-composition comprises one or more polymerizable and/or crosslinkable organic compounds, one or more photoinitiators, one or more copper complex, one or more photo sensitizers and one or more redox or photochemical rearrangement organic compounds.

### BACKGROUND ART

Resin-compositions, which are polymerizable and/or crosslinkable by electromagnetic radiation, such as electromagnetic radiation comprising UV, Visible and IR light, are suitable for use in many applications. One application is for curing a liner, e.g. in a pipeline in a relining process.

Pipelines and tanks are typically made of robust and heavy materials such as steel, concrete, clay or very rigid plastic. Exchanging existing pipelines and tanks is usually a costly process, especially when the pipeline or tank is located underground or in difficult accessible places such as sewage pipelines. It is therefore preferable to renovate the defective pipeline or tank instead of replacing it. For example, a process called relining is used to renovate a defective pipeline, such as a leaking sewage pipeline, in which process a fiber liner is inserted into the existing pipeline. The liner generally made of woven or non-woven fibers is resin-impregnated and after mounting and cure has a shape like a tube having approximately the same diameter as the pipeline or tank.

The resin-composition in the liner is allowed to cure after being inserted into the pipeline. When cured, the liner will be robust, solid and fluid-tight. The inner surface of the liner will be very smooth, i.e. have a low surface roughness. Due to the decreased roughness, the flow rate with the liner installed will typically be improved compared to the flow rate without liner, even if the liner reduces the effective flow area of the pipeline.

Pull-in or Eversion are common technology used for lining and relining existing pipelines. Eversion is made by fastening one end of the liner onto a turning head and subsequently inverting the liner into the pipeline by the use of pressurized fluid, e.g. water, steam. Electromagnetic radiation like UV light, visual light or hot fluid like water or steam is typically used to perform the subsequent curing of the liner in order to form a rigid and fluid-tight composite wall structure on the inner surface of the pipelines, tanks or other geometry structures.

An advantageous technology for curing a liner has been described in the international patent application DK2008/000073, published as WO 2008/101499. The above-mentioned patent application relates to an apparatus for curing a liner. The apparatus includes a light curing device comprising a mobile and flexible "light train" having a set of LEDs (light emitting diodes), which are used to cure the liner.

The light curing device is typically cooled by the use of compressed air as it is readily available since it is used for the other above-mentioned purposes. In the prior art devices, the compressed air is led through heat sinks running straight through the light curing device. Other cooling media than air can be used as well.

However, there has been a long-felt need in the field of (photo)curing of curable resin-compositions to find improved and reliable resins and methods for providing cured structural parts, i.e. parts and resin objects having a thickness of at least 0.5 mm, and having appropriate mechanical properties such as tensile strength and modulus, hardness, adhesion and chemical resistance. Safety considerations also play a major role when curing a polymerisable or crosslinkable resin mixed with (co)polymerisable free monomer, i.e. in a reactive or non-reactive diluent. Reactive or non-reactive diluents generally are relatively volatile compounds that may be dangerous because of explosion risks at incidentally occurring high temperatures, and because of toxicity aspects during preparation of the cured materials.

### DISCLOSURE OF THE INVENTION

An object of the present invention is to provide a curable resin-composition suitable for curing an item, e.g. a resin impregnated liner, where the resin composition can be cured by using electromagnetic radiation, such as an UV-light emitter in a reliable and controlled manner and provide a cured item with sufficient degree of cure through the entire depth of the item.

A further object is to provide a curable resin-composition which can be cured in an efficient and cost-effective manner.

The principle of curing a resin-composition in a photoinduced polymerization or photopolymerization reaction consists in exposing the composition comprising monomers, oligomers and/or polymers bearing reactive functionalities (such as acrylic, vinyl, epoxy, etc.) to light radiation so as to produce active species (free radicals or cations) in order to initiate a polymerization. The generation of these species takes place by excitation of photosensitive components in the resin-composition, commonly via an additive denoted "photoinitiator".

A photoinitiator has a defined electromagnetic radiation wavelength interval in which it generates active species for polymerization initiation. It is possible to extend this interval by photosensitizaion using a photosensitizer in combination with the photoinitiator. A photosensitizer is a molecule which absorbs electromagnetic radiation wavelengths different than those absorbed by the photoinitiator and transfers this energy to the photoinitiator, thus extending its spectral sensitivity.

Thus, in a first aspect, the present invention relates to a resin-composition which is curable and polymerizable by an electromagnetic radiation, said composition comprising:
one or more polymerizable and/or crosslinkable organic compounds;
a photoinitiator comprising a iodonium salt;
one or more photosensitizers;
a copper-complex;
one or more redox or photochemical rearrangement organic compounds; and
one or more diluents

Although the resin-composition functions very well using one sensiziter, it is has been found that it is possible to combine the photoinitiator with at least two photosensitizers. The photosensitizer's high triplet energy is used to sensitize the initiator and therefore the photolysis yield. Thus, a greater amount of reactive species are generated and, consequently, the polymerization is more rapid. As examples of photosensitizers, may be mentioned: camphorquinone, anthraquinone, anthracene, pyrene, phenothiazine, benzophenone, acetophenone, xanthones, carbazole derivatives, ethoxynaphtalene derivates, fluorenone and acylphosphine oxides.

The further combination with a copper-complex and at least one redox or photochemical rearrangement organic compound serves to improve the reactions in the resin-composition during curing (i.e. increase reaction) thereby enhancing the properties of the cured composition.

The diluents serve to adjust the resin-composition viscosity as well as to adjust the final properties after it is cured.

Generally, the resin-composition comprises:
50 - 90% of one or more polymerizable and/or crosslinkable organic compounds;
0,1 - 5,0% of the photoinitiator;
0,1 - 6,5% of the one or more photosensitizers;
0,1 - 5,0% of a second photosensitizer;
0,01 - 5,0% of the copper-complex;
0,1 - 5,0% of one or more redox or photochemical rearrangement organic compound; and
5 - 45% of one or more diluents.

All percentages are weight percentages.

The resin-composition should always comprise one photosensitizer. However, the composition may also comprise a second or more photosensitizers, such as a third, fourth, fifth and sixth photosensitizer. Preferably, the photosensitizers are each present in an amount of 0,1 - 5,0% of the composition.

The combination of one or more photosensitizers, organic acid and copper-complex in the resin-composition gives a controlled cure rate and cure exotherm of the resin, upon suited electromagnetic radiation. It is possible to formulate the composition so the peak exotherm temperature will be between 100 to 230 °C, such as between 110 to 220 °C.

The resin-composition is preferably based on epoxy compounds which, when included in a curable composition, can provide cured items with excellent sought after properties, such as good adhesion, low shrinkage, and high strength. Thus, preferably at least one polymerizable and/or crosslinkable organic compound is selected from compounds of trimethylolpropane triacrylate and oxybis(methyl-2,1-ethandiyl)diacrylate, BPA epoxy resins such as liquid, semisolid and solid bisphenol A epoxy resin, novalac epoxy resin, halogenated and non-halogenated epoxy resins, cardanol based epoxy resin, sorbitol based epoxy resin, bio epoxy resins, bisphenol F epoxy resins and any combination thereof.

lodonium salts have proven to function excellent as photoinitiators, thus the photoinitiator in the resin-composition is based on an iodonium salt. Preferably, the iodonium salt is selected from lodonium diphenyl- 4,4'-di-C10-30 alkyl derivatives and tetrakis (2,3,4,5,6-pentafluorophenyl) borates.

The photosensitizers in the resin-composition may be selected from e.g. camphorquinone, anthraquinone, anthracene, pyrene, phenothiazine, benzophenone, acetophenone, xanthones, carbazole derivatives, ethoxynaphtalene, fluorenone and acylphosphine oxides which all functions well as photosensitizers. Preferably, the photosensitizers are selected from camphorquinone, anthracene, such as 9,10-dibutoxyanthracene, ethoxynaphtalene, such as 1,4-diethoxynaphthalene.

Inclusion of a copper-complex in the resin-composition improves the curing and hardening of the resin. Preferably, the copper-complex is selected from copper naphthanate, copper benzoate, copper sulfate, copper tetra fluoro borate, and copper carbonate.

The resin-composition also comprises a redox or photo chemical rearrangement organic compound which improves the curing by influencing the formation of Brøndsted acids. Preferably, the redox or photo chemical rearrangement organic compound is based on an organic acid selected from ascorbic acid, 2,3-dimethyl 2,3-butanediol, and 4,4 diphenylcyclohexadienone.

The diluents serve to lower the viscosity of the resin-composition and preferably the one or more diluents are selected from 1, 4-butatanediol diglycidyl ether, C12-C14 alkyl glycidyl ether, o-cresyl gycidyl ether, phenol glycidyl ether, propylene glycol diglycidyl ether, polypropylene glycol diglycidyl ether, 1,6- hexanediol diglycidyl ether, trimethylol propane triglycidyl ether, cardanol based mono, di- and tri- functional epoxy reactive and non-reactive diluents, triethylene glycol divinyl ether, diethyleneglycol divinyl ether, cyclohexanedimethanol divinyl ether, hydroxybutyl vinyl ether, cyclohexyl vinyl ether, isobornyl acrylate, 3,3,5-trimethyl cyclohexyl acrylate, 4-tert-butyl cyclohexyl acrylate, cyclic trimethylol propane formal acrylate, tetrahydrofurfuryl acrylate, tripropylene glycol diacrylate, tri and tetra ethylene glycol diacrylate, tricyclodecane dimethanol diacrylate, propylene glycol 200 - 600 diacrylate, trimethylol propane triacrylate, glycerin (PO)3 triacrylate, pentaerythritol tetraacrylate, isodecyl methacrylate, benzyl methacrylate, 1,4-butanediol dimethacrylate, 1,6-hexanediol dimethacrylate, neopentyl glycol dimethacrylate, polyester acrylates such as mono, di, tri, tetra, hexa functional poyester acrylates, phosphate methacrylate, carboxyethyl acrylate, alkali strippable polyester acrylate.

In an embodiment, the resin-composition after cure has a volume shrinkage of less than 5%, such as less than 3%, such as less than 2%. A low volume shrinkage is desirable, e.g. if the resin-composition is intended for repairing a pipe or tank by the relining method described, where the liner or structure comprising the resin should have a close fit after cure.

It is possible to cure the resin-composition using a wide range of electromagnetic radiation wavelengths, comprising ultraviolet- (UV) and visible- (VIS), Infrared- (IR) light, and in an embodiment the resin-composition is polymerizable by an electromagnetic radiation of UV, IR and VIS light, hereafter denominated light, in the wavelength from light emitting source, emitting light in the range from 360 to 700 nm, preferably emitting light in the range from 400 to 480 nm.

Using a light in the wavelength range 400 to 480 nm provides a good curing of the resin-composition, even if the items to be cured have a thickness above 3 mm, such as between 3 and 6 mm, or a thickness up to 10 mm. The resin may be cured using light of one or a combination of two or more suitable wavelengths. Thus, the resin may be cured using light of two different wavelengths, such as e.g. 365 nm and 415 nm, or 415 nm and 472 nm. The suitable light wavelengths can easily be selected by the skilled person and be adapted in accordance with sensitizers used, e.g. in such a way that a first wavelength is chosen as the wavelength where e.g. the first sensitizer absorbs most energy and a second wavelength is chosen as the wavelength where a second sensitizer absorbs most energy.

The invention also relates to a resin-composition which is curable and polymerizable by electromagnetic radiation, said composition comprising:
one or more polymerizable and/or crosslinkable organic compounds;
a photoinitiator comprising a iodonium salt;
one or more photosensitizer;
one or more copper-complex; and
one or more redox or photo chemical rearrangement organic compounds;
wherein the resin-composition after cure has a volume shrinkage of less the 5%, such as less than 3%, such as less than 2%.

A low volume shrinkage is desirable, e.g. if the resin is intended for repairing a pipe or tank by the relining method described, where the liner comprising the resin should have a close fit after cure.

The one or more polymerizable and/or crosslinkable organic compounds are preferably based on epoxy compounds which, when included in a curable composition, can provide cured items with excellent sought after properties, such as good adhesion, low shrinkage, and high strength. Thus, preferably the at least one polymerizable and/or crosslinkable organic compound is selected from compounds of trimethylolpropane triacrylate and oxybis(methyl-2,1-ethandiyl) diacrylate, BPA epoxy resins such as liquid, semisolid and solid bisphenol A epoxy resin, novalac epoxy resin, halogenated and non-halogenated epoxy resins, cardanol based epoxy resin, sorbitol based epoxy resin, bio epoxy resins, bisphenol F epoxy resins and any combination thereof.

The photoinitiator comprises an iodonium salt having good properties as photoinitiators. Preferably, the iodonium salt is selected from iodonium diphenyl- 4,4'-di-C10-30 alkyl derivatives and tetrakis (2,3,4,5,6-pentafluorophenyl) borates.

The one or more photosensitizers in the resin-composition may be selected from e.g. camphorquinone, anthraquinone, anthracene, pyrene, phenothiazine, benzophenone, acetophenone, xanthones, carbazole derivatives, ethoxynaphtalene, fluorenone and acylphosphine oxides which all function well as photosensitizers. Preferably, the photosensitizers are selected from camphorquinone, anthracene, such as 9,10-dibutoxyanthracene, ethoxynaphtalene, such as 1,4-diethoxynaphthalene.

The resin-composition also comprises a redox or photo chemical rearrangement organic compound which improves the curing by influencing the formation of Brøndsted acids. Preferably, the redox or photo chemical rearrangement organic compound is based on an organic acid selected from ascorbic acid, 2,3-dimethyl 2,3-butanediol, and 4,4-diphenylcyclohexadienone.

The resin-composition including a photoinitiator comprising an iodonium salt, one or more photosensitizer; and one or more redox or photo chemical rearrangement organic compounds has proven to have excellent properties in respect of shrinkage. The resin also has good mechanical properties such as tensile strength and modulus, hardness, adhesion and chemical resistance

In an embodiment, the resin-composition also includes a copper-complex. Inclusion of a copper-complex in the resin-composition improves the curing and hardening of the resin. Preferably, the copper-complex is selected from copper naphthanate, copper benzoate, copper sulfate, copper tetra fluoro borate, and copper carbonate.

The resin-composition may also comprise one or more diluents. The diluents serve to lower the viscosity of the resin-composition and preferably, the one or more diluents are selected from 1, 4-butatanediol diglycidyl ether, C12-C14 alkyl glycidyl ether, o-cresyl gycidyl ether, phenol glycidyl ether, propylene glycol diglycidyl ether, polypropylene glycol diglycidyl ether, 1,6- hexanediol diglycidyl ether, trimethylol propane triglycidyl ether, cardanol based mono, di and tri functional epoxy reactive and non-reactive diluents, triethylene glycol divinyl ether, diethyleneglycol divinyl ether, cyclohexanedimethanol divinyl ether, hydroxybutyl vinyl ether, cyclohexyl vinyl ether, isobornyl acrylate, 3,3,5-trimethyl cyclohexyl acrylate, 4-tert-butyl cyclohexyl acrylate, cyclic trimethylol propane formal acrylate, tetrahydrofurfuryl acrylate, tripropylene glycol diacrylate, tri and tetra ethylene glycol diacrylate, tricyclodecane dimethanol diacrylate, propylene glycol 200 - 600 diacrylate, trimethylol propane triacrylate, glycerin (PO)3 triacrylate, pentaerythritol tetraacrylate, isodecyl methacrylate, benzyl methacrylate, 1,4-butanediol dimethacrylate, 1,6-hexanediol dimethacrylate, neopentyl glycol dimethacrylate, polyester acrylates such as mono, di, tri, tetra, hexa functional poyester acrylates, phosphate methacrylate, carboxyethyl acrylate, alkali strippable polyester acrylate.

The invention also relates to a method for curing a composite material containing the resin-composition, e.g. liner. The method comprises the steps of providing a resin-composition as described above and impregnating the liner with the resin-composition and curing the resin-composition using ultraviolet- (UV) and visible- (VIS), Infrared- (IR) light in the range 360 to 700 nm to obtain a cured liner or the resin-composition may be used in a composite for e.g. boat building and wind turbine blades.

Although it is possible to use any suitable light source as the cure light, the cure light is preferably provided by LEDs (light emitting diodes) which may generate light in a cost-effective manner. LEDs also have the benefit that they are wavelength specific, with narrow wavelength distributions, thus the LED light source can be designed to emit light in narrow bands around chosen suited wavelengths, such as 415 nm, 450 nm and 472 nm. The emitted light may have an intensity between 0.001 W/cm² - 15 W/cm², such as an intensity between 0.005 W/cm² and 12 W/cm², such as an intensity between 0.01 W/cm² and 10 W/cm². The emitted light may pass along the surface of the liner with a speed of 3 to 200 m/h, such as a speed of 5 to 100 m/h, such as a speed of 10 to 90 m/h.

The resin may be contained in a carrier such as a fiber liner, preferably the fibers are polymer fibers, or glass fibers. In an embodiment, the liner is intended for lining a pressurized or non-pressurized pipe, side connections, hat profiles (top-hat) and tee-hat.

The method also comprises the steps:
a: providing a resin-composition comprising a photo initiator selected from lodonium diphenyl-4,4'-di-C10-13alkyl derivatives, tetrakis (2,3,4,5,6-pentafluorophenyl) borates and camphorquinone and anthracene as sensitizers
b: adding solvent selected from ether or alcohol to the mixture
c: stirring till the mixture is dissolved in the solvent
d: adding bisphenol A glycidyl ether resin, bisphenol F glycidyl ether resin and epoxy diluents to obtain the curable composition.

In an embodiment, the method comprises the further step of adding ascorbic acid to the mixture before step b.

The method may also include adding at least one further component in step d, selected from polyester acrylates, epoxy acrylate, polyurethane acrylate, and/or polyether acrylate.

Moreover, the method may also comprise the further step of adding tetramethylethylene glycol and copper salt or copper complex in step d.

The method may include adding at least one further component in step d, selected from mono- , di- and/or tri- functional acrylate including Acyl, aromatic, ether, dioxolane, carboxylic acid amide with acryloyl group and oxetane acrylate.

In an embodiment, the method comprises the steps:
e: applying the obtained curable resin-composition on a fiber liner
f: applying LED light of wave length 400 to 480 nm with an intensity between 0.01 W/cm² and 10 W/cm² to the surface of fiber liner with a speed of 10 to 90 m/hr.
g: allowing the fiber reinforced liner to cool down to room temperature.

The invention also relates to use of the resin-composition for repairing and/or curing a liner. The liner is impregnated with the resin-composition in a known manner and the liner is mounted in the location where it should be cured, these processes are also well-known and well-established.

The invention also relates to use of the resin-composition for pipe rehabilitation with the use of liner systems, felt liner, glass liner and other carrier materials, vertically and horizontally, side connections, hat-profiles (top-hat) and tee-hat.

The invention also relates to use of the resin-composition for outside pipe-wrapping with material like fiberglass, carbon fiber, basalt, polyester, where the material is wetted out with the resin-composition and cured. This may serve to protect pipes from corrosion or to reinforce pressurized pipes.

The invention also relates to use of the resin-composition in a composite suitable for use in boatbuilding, wind turbine blades, spray coat etc. The structural fibers like fiberglass, carbonfiber, basalt or polyester are wetted out with the resin-composition and cured.

Morever, the invention also relates to use of the resin-composition with added fillers of reinforcement in the form of glass fibers, carbon fibers, carbon nanotubes, inorganic fillers and other materials, for repair and/or protection of surfaces of materials such as steel, concrete, clay, stone, rigid composites, rigid plastics and other rigid materials by the method of spray, roller, brush, dip and other application methods.

The invention also relates to use of the resin-composition for coating and/or protection of surfaces of materials such as steel, concrete, clay, stone, plastics, rigid composites, rigid plastics and other rigid materials.

Moreover, the invention relates to use of the resin-composition in 3D printing technology.

The invention provides a resin-composition with sufficient degree of cure through the entire depth of the item to be cured, a resin-composition which can be cured using a broader UV range, and better heat control is obtained during curing.

### DETAILED DESCRIPTION OF THE INVENTION

The principles of the invention are explained below by means of examples.

### Example 1

Formulation of light curable thermochemically Bisphenol A glycidyl ether (BPA) resin

A photoinitiator UV cata 243 (lodonium salt photo iniator delivered by BLUESTAR Silicones) was photosensitized by long wave UV absorber camphorquinone along with Anthracene (Anthracure UVS 2171 delivered by Kawasaki Kasei Chemicals Ltd.) at a wavelength about 450 nm, which led to very good degree of cure through the entire depth of the resin impregnated item.

The reactions are as follows. The photoinitiator absorbs the light and by heterolytic or by homolytic cleavage of diphenyliodonium salt it produces an aryl cation which in presence of a hydrogen donor produces a proton which coupled with an anion provides Brønsted acid.

The Brønsted acid reacts with an epoxy group (in the BPA) to form a carbonium cation, which attacks another epoxy group to form polyether by ring opening cationic polymerisation. Heat is generated during the reaction between the epoxy group and the Brønsted acid, which is produced by the photochemical reaction.

In the presence of ascorbic acid and heat, the Brønsted acid is produced again, and may again react with the epoxy groups and continue the reaction to form polyether.

An epoxy resin according to the invention was prepared. The resin had the following composition by weight
72%. BPA - BPF resin.
1% 4-(1-methylethyl)phenyl)-(4-methylphenyl)iodonium tetra-kis(pentafluorophenyl)borate(1-)
1% Camphorquinone
1% 9,10-dibutoxyanthracene
1% 1,4-diethoxynaphthalene
1% copper naphthalate
1% ascorbic acid
22% butandioldiglycidylether

The resin-composition was prepared as follows. The UV cata 243 was weighed along with camphorquinone, Anthracure UVS 2171 and ascorbic acid. Ether or alcohol solvent was added in proportion and heated up to 40 to 50 C. Stirring was continued till the mixture was completely soluble in the solvent. Then Bisphenol A glycidyl ether resin was added with epoxy diluents.

The above mix of BPA resin was applied on a 3 to 6 mm thick fiber liner in absence of light, i.e. under dark condition. Then the LED light source, emitting light in the wavelength range from 440 to 460 nm, was switched on. The light was emitted onto the surface of resin filled fiber liner at the speed of 40 to 80 m/hr. The peak exotherm of the reaction was measured between 110 and 180 °C. The liner was left to cool down to room temperature and the mechanical properties were measured.

The resin was cured by light in the wavelength range 440 to 460 nm and the mechanical properties were tested on pure resin seven days after cure. Eight samples were tested according to the procedures outlined in the standards ASTM D 638 - 2a, ASTM D 790 and ASTM D 2240.

| | | |
|---|---|---|
| Tensile strength | 55 - 75 MPa | (ASTM D 638 - 2a) |
| Tensile modulus | 30-3600 MPa | (ASTM D 638 - 2a) |
| Flexural strength | 125-150 MPa | (ASTM D 790) |
| Flexural modulus | 45-5400 MPa | (ASTM D 790) |
| Shore D hardness | 87-90 | (ASTM D 2240) |

The results showed that the resin-composition has mechanical properties fully satisfactory as resin in a liner for e.g. relining a sewer pipe.

The mechanical properties fulfilled the requirements and it could be concluded that the resin composition is suitable for use in a liner.

The reaction scheme is shown below.

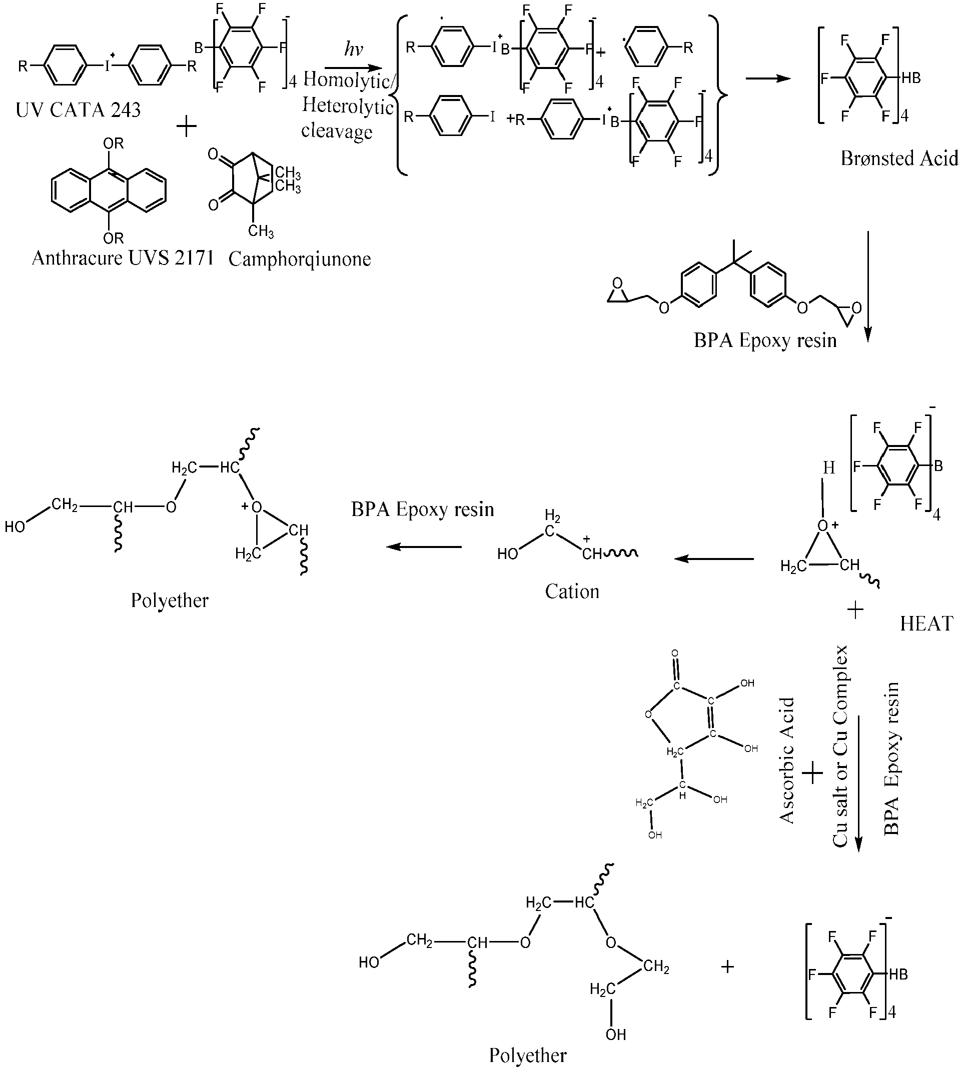

Alternatively to the described light induced ring-opening or free radical photo curing, it is also possible to obtain a thermoredox light curing of Bisphenol A glycidyl ether resin (BPA resin) and its hybridization with light curable acrylates.

The thermoredox light cure of bisphenol A glycidyl ether was carried out in the presence of tetramethylethylene glycol and copper salt or copper complex.

The UV cata 243 was weighed up along with camphorquinone, Anthracure UVS 2171 and tetramethylethylene glycol. Ether or alcohol solvent was added in proportion and the mixture was heated up to 40 to 50 °C. Stirring was continued till the mixture was completely soluble in the solvent. Bisphenol A glycidyl ether was added along with epoxy diluents. Cu- salt or Cu- complex was added. The mixture was applied on a fiber liner and exposed to light in the wavelength range from 440 to 460 nm, until the cure was completed.

The reaction scheme is shown below.

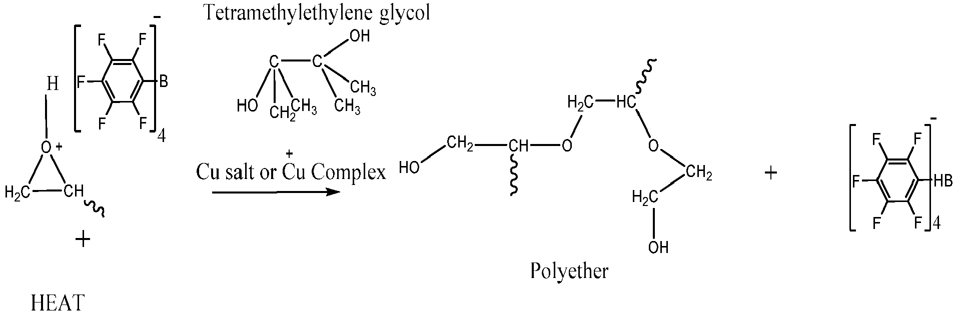

### Example 2

It is also possible to achieve a hybrid reaction by adding light curable acrylates to the above-mentioned mixture and carry out the curing process in presence of a light source with 440 to 460 nm wavelength.

The invention also includes a hybrid reaction as follows. The addition of LED curable polyester acrylates or epoxy acrylate or polyurethane acrylate or polyether acrylate into the described LED curable mix Bisphenol A glycidyl ether resin with photo initiator and photosensitizers, also modify the reactivity as well as the mechanical and adequate thermal properties, e.g. tensile strength, elastic modulus and glass transition temperature.

Polyester acrylates/epoxy Acrylate/polyurethane acrylate/polyether acrylate was mixed with up to 20% Bisphenol A glycidyl ether, UV cata 243, UVS 2171, Camphorquinone, ascorbic acid and applied on a fiber liner and exposed to light in the wavelength range from 440 to 460 nm until the cure was completed.

An epoxy acrylate resin according to the invention was prepared. The resin had the following composition by weight.
56 % Epoxidised compound of trimethylolpropantriacrylat and oxybis(methyl-2,1-ethandiyl)diacrylat
20% BPA - BPF resin.
1% 4-(1-methylethyl)phenyl)-(4-methylphenyl)iodonium tetra-kis(pentafluorophenyl)borate(1-)
1% Camphorquinone
1% 9,10-dibutoxyanthracene
1% 1,4-diethoxynaphthalene
1% copper naphthanate,
1% ascorbic acid
9% isobornyl acrylate
9% 1,4-Butanediol dimethacrylate

The resin was cured by light in the range 440 to 460 nm and the mechanical properties were tested on pure resin samples seven days after curing. The samples were tested according to the procedures outlined in the standards ASTM D 638 - 2a, ASTM D 790 and ASTM D 2240.

| | | |
|---|---|---|
| Tensile strength | 35-50 MPa | (ASTM D 638 - 2a) |
| Tensile modulus | 21-2800 MPa | (ASTM D 638 - 2a) |
| Flexural strength | 95-110 MPa | (ASTM D 790) |
| Flexural modulus | 27-4500 MPA | (ASTM D 790) |
| Shore D hardness | 85-90 | (ASTM D 2240) |

Although a certain variety was found in respect of tensile modulus and flexural modulus, the results were fully acceptable.

The resin-composition was also tested in non-woven polyester. This test is intended to simulate the resin-composition properties in a liner.

A 3 mm thick polyester liner was impregnated with the resin and positioned in a test setup comprising polyvinylchloride (PVC) and steel pipes. The resin impregnated liner within the pipe test setup was cured by light having wavelengths in the range 440 to 460 nm.

The mechanical properties of in line installed liner samples from both the PVC and steel pipes were measured after 3 weeks. The measurements were performed according to the standard ISO 7685.

| | | |
|---|---|---|
| Youngs-modulus: | 1500-2500 MPa | (ISO 7685) |
| Ring stiffness: | 2,5 - 4 KN/m2 | (ISO 7685) |
| 3% deflection by strain: | 42 - 56 N | (ISO 7685) |

The obtained result showed that the resin-composition provided excellent mechanical properties for pipe repair when cured in a liner. The results for elasticity (Youngs-modulus), ring stiffness and deflection clearly indicate that the composition provides properties fully satisfactory for e.g. sewer pipe renovation. Moreover, the resin-composition showed good adhesion to plastic (PVC) and cast iron and had a low percentage of shrinkage during curing, the volume shrinkage was typically below 5%.

The invention provides a curable and polymerizable resin-composition having a low shrinkage and a good adhesion to plastic and steel. Moreover it is possible to adjust and control peak exotherm temperaure during curing process, typically between 110 and 230 °C, so undesired overheating can be avoided.

The tested resin compositions according to the invention have after curing proven to have a satisfactory tensile strength, elasticity and adequate temperature resistance.

## Claims

1. A resin-composition which is curable and polymerizable by electromagnetic radiation, said composition comprising:
one or more polymerizable and/or crosslinkable organic compounds;
a photoinitiator comprising a iodonium salt;
one or more photosensitizer;
a copper-complex;
one or more redox or photochemical rearrangement organic compounds; and
one or more diluents.

2. The resin-composition according to claim 1, wherein the composition comprises:
50 - 90% of the one or more polymerizable and/or crosslinkable organic compounds;
0,3 - 1,5% of the photoinitiator;
0,2 - 6,5% of the one or more photosensitizer;
0,01 - 5,0% of the copper-complex;
0,1 - 0,5% of one or more redox or photochemical rearrangement organic compound; and
5 - 45% of the one or more diluents.

3. The resin-composition according to claim 1 or 2, wherein the at least one polymerizable and/or crosslinkable organic compound is selected from compounds of trimethylolpropanetriacrylate and oxybis(methyl-2,1-ethandiyl)diacrylate, BPA epoxy resins such as liquid, semisolid and solid bisphenol A epoxy resin, novalac epoxy resin, halogenated and non-halogenated epoxy resins, cardanol based epoxy resin, sorbitol based epoxy resin, bio epoxy resins, bisphenol F epoxy resins.

4. The resin-composition according to any one of the preceding claims, wherein the iodonium salt is selected from Iodonium diphenyl- 4,4'-di-C10-30alkyl derivatives and tetrakis (2,3,4,5,6-pentafluorophenyl) borates.

5. The resin-composition according to any one of the preceding claims, wherein the one or more photosensitizers are selected from camphorquinone, anthracene, such as 9,10-dibutoxyanthracene, ethoxynaphtalene, such as 1,4-diethoxynaphthalene.

6. The resin-composition according to any one of the preceding claims, wherein the copper-complex is selected from copper naphthanate, copper benzoate, copper sulfate, copper tetra fluoro borate, copper carbonate.

7. The resin-composition according to any one of the preceding claims, wherein the one or more redox or photochemical rearrangement organic compound is based on organic acids, selected from ascorbic acid, 2,3-dimethyl 2,3-butanediol, 4,4 diphenylcyclohexadienone.

8. The resin-composition according to any one of the preceding claims, wherein the composition is polymerizable by electromagnetic radiation from an emitter, emitting light in the range from 360 to 700 nm, preferably emitting light in the range from 400 to 480 nm, and preferably the composition after curing has a volume shrinkage of less the 5%, such as less than 3%, such as less than 2%.

9. A resin-composition which is curable and polymerizable by electromagnetic radiation, said composition comprising:
one or more polymerizable and/or crosslinkable organic compounds;
a photoinitiator comprising a iodonium salt;
one or more photosensitizer;
one or more redox or photo chemical rearrangement organic compounds;
wherein the resin-composition after cure has a volume shrinkage of less the 5%, such as less than 3%, such as less than 2%.

10. A method for curing a liner comprising the steps of:
providing a resin-composition according to any one of claims 1 to 10;
impregnating the liner with the resin-composition;
curing the resin-composition using light in the range 360 to 700 nm such as 400 to 480 nm,
preferably the liner is felt or fiber reinforced, preferably the fibers are polymer fibers, glass fibers, carbonfibers or basalt.

11. The method according to claim 10, wherein said method comprising the steps:
a: providing a resin-composition comprising a photo initiator selected from Iodonium diphenyl-4,4'-di-C10-13alkyl derivatives., tetrakis (2,3,4,5,6-pentafluorophenyl) borates and camphorquinone and anthracene as sensitizers
b: adding solvent (selected from ether or alcohol to the mixture)
c: stirring till the mixture is dissolved in the solvent
d: adding bisphenol A glycidyl ether resin, bisphenol F glycidyl ether resin and epoxy diluents to obtain the curable composition.

12. The method according to claim 10 or 11 comprising the further step of adding ascorbic acid to the mixture before step b, and preferably the method comprising during step d, adding at least one further component selected from polyester acrylates, epoxy acrylate, polyurethane acrylate, and/or polyether acrylate, and preferably the method comprising the further step of adding tetramethylethylene glycol and copper salt or copper complex during step d.

13. A method according to any one of the claims 10 to 12 comprising during step d, adding at least one further component selected from mono-, di- and/or tri- functional acrylate including Acyl, aromatic, ether, dioxolane, carboxylic acid amide with acryloyl group and oxetane acrylate.

14. A method according to any one of the claims 10 to 13 comprising the further steps:
e: applying the light curable resin-composition onto a fiber liner
f: applying the light with wave length of 360 to 700, preferable 400 to 480 nm with intensity 0.001 W/cm² to 15 W/cm², preferable 0.01 W/cm² to 10 W/cm² to the surface of fiber liner with a speed 3 to 200 m/h, preferable of 10 to 90 m/hr.
g: allowing the fiber liner to cool down to room temperature.

15. Use of the resin-composition according to claim 1 for repairing and/or curing a pipe, pipe side connection, pipe fitting, manhole, tank, and other vertical or horizontal structures with the use of liner systems such as felt liner, glass liner and liners of other carrier materials including open foam, manufactured as a simple tube, hat-profiles, reinforcement materials, vertically and horizontally, side connections, hat-profiles (top-hat), tee-hat and other fitting structures, or use of the resin-composition for outside wrapping of pipes, tanks and other structures with material selected from fiberglass, carbon fiber, basalt-fibers, polyester and other bendable organic and inorganic fibers, or use of the resin-composition according to claim 1 for repairing and/or building a composite construction for boat building, wind turbine blades and other composite structures, or use of the resin-composition according to claim 1 with possibly added fillers or reinforcement in the form of glass fibers, carbon fibers, carbon nanotubes, inorganic fillers and other materials, for repair and/or coating and/or protection of surfaces of materials such as steel, concrete, clay, stone, plastics, rigid composites, rigid plastics and other rigid materials by the method of spray, roller, brush, dip and other application methods, or use in 3D printing technology.
